# EUROPÄISCHE PATENTANMELDUNG

(11) **EP 0 930 684 A1**
(43) Veröffentlichungstag der Anmeldung: **21.07.1999**
(21) Anmeldenummer: 98123501.3
(22) Anmeldetag: 14.12.1998
(51) Int. Cl.: H02G 3/04

(54) **Modular aufgebauter Elektroinstallationskanal**

(30) Priorität: 13.01.1998 DE 29800403 U
(71) Anmelder: Albert Ackermann GmbH & Co. KG, 51643 Gummersbach (DE)
(72) Erfinder: Fastenroth, Kurt-Helmut, 51647 Gummersbach (DE)
(74) Vertreter: Wilhelm & Dauster Patentanwälte European Patent Attorneys

(57) **Zusammenfassung**

Beschreiben wird ein modular aufgebauter Elektroinstallationskanal mit einem einseitig offenen, durch einen Deckel verschließbaren Kastenprofil, das einen Rückwand-, zwei Seitenwand- und zwei mit Rinnen zum Einsetzen des Deckels versehene Frontabschnitte aufweist und aus wenigstens drei Profilteilen aufgebaut ist, die schwenk- und einrastbar aneinandergehalten sind. Das Rückwandteil (2) ist als C-förmige Schiene mit seitlich hochragenden Schenkeln (2a) ausgebildet und im Bereich der freien Enden der Schenkel (2a) sind scharnierartige Halteabschnitte (2b) vorgesehen, an denen nach innen abschwenkbare Seitenteile (3, 4) rastend und mit einem Teilbereich in Anlage an den Außenflächen der Schenkel (2a) des Rückwandteiles (2) gehalten sind.

## Beschreibung

Die Erfindung betrifft einen modular aufgebauten Elektroinstallationskanal mit einem einseitig offenen, durch einen Deckel verschließbaren Kastenprofil, das einen Rückwand-, zwei Seitenwand- und zwei mit Rinnen zum Einsetzen des Deckels versehene Frontabschnitte aufweist und aus wenigstens drei Profilteilen aufgebaut ist, die schwenk- und einrastbar aneinandergehalten sind.

Ein derartiger Elektroinstallationskanal ist aus der DE 296 10 947 U1 bekannt. Dort hat man, um die Kanalteile in flacher Form transportieren und erst am Einsatzort in die Endform bringen zu können, die Seitenwände scharnierartig nach außen klappbar an einem Rückwandteil angeordnet und an den Scharnierstellen Rastelemente vorgesehen, durch die die Seitenwände unter einem Winkel von 90° zu dem Rückwandteil gehalten werden können. Durch diese Ausgestaltung ist es möglich, eine gewünschte Kanalform aus standardisierbaren Teilprofilen zusammenzusetzen und somit eine hohe Modellvielfalt zu erzielen, bei unvorhergesehenen Belastungen besteht aber wegen der von den Seitenwänden ausgeübten Hebelwirkung die Gefahr, daß sich im Scharnierbereich die Rasteinrichtungen lösen und der Kanal auseinanderklappt.

Aus der DE 40 12 442 C2 ist ferner ein Elektroinstallationskanal in Form einer vertikal angeordneten Versorgungssäule bekannt, der aus zwei identischen U-förmigen Profilteilen besteht. Die Profilteile weisen an ihren abragenden, kurzen Schenkeln zwei korrespondierende Rasteinrichtungen auf. Die erste Rasteinrichtung an einem ersten Schenkel jedes Profilteiles weist dabei eine Zunge mit einer innenseitigen Kreisrinne auf, während die zweite Rasteinrichtung als elastisch nachgiebige zweischenklige Gabel ausgeführt ist, die in an der ersten Rasteinrichtung formschlüssig angreift. Dadurch lassen sich die beiden Profilteile einer Versorgungssäule zum einen zuverlässig miteinander verrasten und zum anderen auf einfache Weise voneinander trennen, wobei im Falle einer Trennung einer ersten Rastverbindung die verbliebene Rastverbindung bestehen bleibt und eine Schwenkbewegung der Profilteile um 90° gegeneinander gestattet.

Aus der DE-U-79 34 333 ist es schließlich auch bekannt, Seitenwandteile eines Elektroinstallationskanales seitlich in nach außen offene gabelförmige Enden eines Rückwandteiles mit an derem unteren Ende vorgesehenen entsprechenden Gegenstücken einzuschieben und in dieser Lage zu verrasten. Auch hier kann aber eine unvorhergesehene Belastung zu einem seitlichen Abklappen der Seitenwände führen, wenn sich die Verrastung löst.

Der Erfindung liegt die Aufgabe zugrunde, einen Elektroinstallationskanal der eingangs genannten Art so auszubilden, daß er besonders einfach herstellbar, flexibel modifizierbar, besonders einfach montierbar und nach dem Zusammensetzen stabil ist.

Mit der Erfindung wird vorgeschlagen, das Rückenwandteil als C-förmige Schiene mit seitlich hochragenden Schenkeln auszubilden und im Bereich der freien Enden der Schenkel scharnierartige Halteabschnitte vorzusehen, an denen nach innen abschwenkbare Seitenteile rastend und mit einem Teilbereich in Anlage an den Außenflächen der Schenkel des Rückwandteiles gehalten sind. Dadurch wird es möglich, einen Elektroinstallationskanal aus wenigen Standardprofilteilen aufzubauen, von denen eines als Rückwandteil konzipiert ist, das unabhängig von den anderen Profilteilen an einer Gebäudewand montierbar ist, wobei die übrigen Profilteile später über eine standardisierte Rastverbindung an dem Rückwandteil angebracht werden können. Durch die gewählte Ausgestaltung wird auch ein Abkippen der Seitenteile, die etwa in ihrer Mitte an den Halteabschnitten gelagert sind, sicher vermieden.

In Ausgestaltung der Erfindung ist jeweils eine Klemmfeder vorgesehen, die an jeweils einem Seitenteil und dem Rückwandteil fixiert ist und das jeweilige Seitenteil nach außen gegen die Schenkel des Rückwandteils drückt. Die Klemmfeder verspannt Rückwand- und Seitenteil derart gegeneinander, daß das Seitenteil zuverlässig in seiner Sollposition gehalten wird, wobei dessen Seitenwandabschnitt in der Sollposition vorzugsweise lotrecht zur Montagefläche des Elektroinstallationskanals ausgerichtet ist. Dabei liegt das Seitenteil wenigstens mit einem Teilbereich außen an dem zugeordneten Schenkel des C-förmigen Rückwandteils an.

In weiterer Ausgestaltung der Erfindung werden die Halteabschnitte als nach innen gerichtete Umkantungen ausgebildet, die von elastisch verformbaren, einstückig mit dem Seitenteil ausgebildeten Rastklauen hintergriffen werden. Dadurch ist das Seitenteil in einem Arbeitsschritt auf das Rückwandteil aufrastbar. Je nach Ausgestaltung der Rastklaue ergibt sich eine mehr oder minder große gegenseitige Verspannung von Rückwandteil und Seitenteil.

In weiterer Ausgestaltung der Erfindung, bei der sowohl eine Klemmfeder als auch eine Rastklaue vorgesehen ist, umgreift die Klemmfeder die Rastklaue und zwingt sie in ihre Rastposition. Dadurch wird eine besonders zuverlässige Verrastung zwischen Rückwand- und Seitenteil erreicht.

In weiterer Ausgestaltung der Erfindung ist das Rückwandteil aus einem festeren Material als die Seitenteile, insbesondere aus Stahl hergestellt, wobei die Seitenteile insbesondere aus Aluminium und/oder Kunststoff gefertigt sind. Bei einer Fertigung der Seitenteile aus Aluminium dienen hierbei vorzugsweise vorsehbare Klemmfedern aus Stahl zum Potentialausgleich zwischen Rückwand- und Seitenteil.

Weitere Vorteile und Merkmale der Erfindung ergeben sich aus der nachfolgenden Beschreibung, in der ein bevorzugtes Ausführungsbeispiel anhand einer Zeichnung erläutert ist.

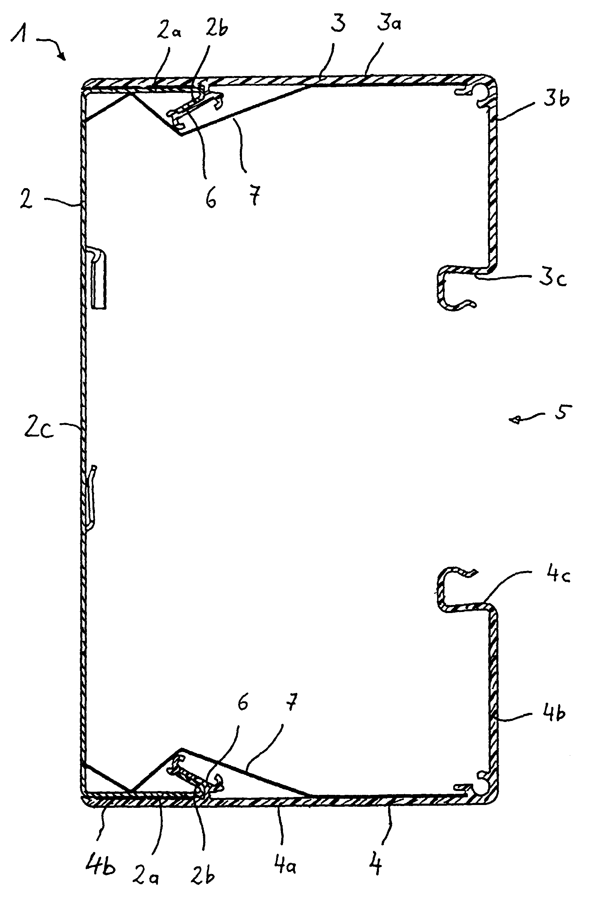

Die einzige Figur zeigt einen Profilquerschnitt eines erfindungsgemäßen Elektroinstallationskanals mit einem C-förmigen Rückwandteil und zwei identischen Seitenteilen.

In der Figur ist ein Installationskanal 1 für Elektrogeräte gezeigt, der aus den Profilteilen 2, 3 und 4 besteht. Das Profilteil 2 ist als Schiene mit in etwa C-förmigem Querschnitt ausgebildet und stellt das Rückwandteil des Installationskanal 1 dar, der beispielsweise an einer Gebäudewand fest montiert ist. Dazu sind nicht dargestellte Befestigungsmittel vorsehbar, die das Rückwandteil 2 durchsetzen. Das Rückwandteil 2 weist an seinen lotrecht von dem zu montierenden Wandteil 2c abragenden kurzen Schenkeln 2a jeweils wenigstens einen hintergreifbaren Halterabschnitt 2b auf. Im dargestellten Ausführungsbeispiel ist das Rückwandteil als C-förmige Schiene aus Stahlblech ausgeführt, wobei die Kalterabschnitte 2b in einfacher Form als Umkantungen der freien Schenkelenden ausgebildet sein. Die Halterabschnitte 2b bilden somit in Längsrichtung des Kanals verlaufende Rinnen, auf die an beliebiger Stelle weitere Bauteile aufsetzbar sind.

Die beiden Profilteile 3 und 4 stellen die Seitenteile des Installationskanals 1 dar und bestehen jeweils im wesentlichen aus einem Seitenwandabschnitt 3a, 4a, einem Frontabschnitt 3b, 4b und einer Rinne 3c, 4c. Die beiden Rinnen 3c, 4c begrenzen die Frontöffnung 5 des Installationskanals 1 in Kanalquerrichtung und können sich durchgehend über die gesamte Länge des Installationskanals erstrecken. Sie dienen zur Aufnahme eines nicht dargestellten Kanaldeckels und sind daher in einem definierten Abstand zueinander angeordnet. Die beiden Seitenteile 3 und 4 sind im wesentlichen identisch oder zumindest gegeneinander austauschbar gestaltet, um eine hohe Flexibilität bei der Konzeption des Installationskanals zu erreichen. Durch Kombination verschieden ausgebildeter Profile lassen sich so unterschiedliche Kanalformen und Kanaldimensionen herstellen.

An den Seitenteilen 3, 4 ist jeweils ein Rastelement in Form einer elastisch verformbaren Rastklaue 6 angebracht, die vorzugsweise jeweils einstückig mit dem zugehörigen Seitenteil 3, 4 hergestellt ist. Im vorgeschlagenen Ausführungsbeispiel sind die Rastklauen 6 gemeinsam mit den Seitenteilen 3, 4 mit Hilfe eines Strangpreßverfahrens oder eines Gußverfahrens hergestellt, wobei als Werkstoffe insbesondere eine Aluminiumlegierung oder ein Kunststoff zur Anwendung kommen. Dabei sind die Rastklauen 6 insbesondere als sich im wesentlichen über die gesamte Länge des Installationskanals erstreckende, rinnenförmige Rastelemente ausführbar. Im abgebildeten montierten Zustand hintergreifen die Rastklauen 6 jeweils den Halterabschnitt 2b des Rückwandteils 2, wodurch sichergestellt wird, daß Rückwand- und Seitenteil formschlüssig gekoppelt sind. Dies ist auf einfache Weise insbesondere dadurch zu realisieren, daß wenigstens eines der beiden Teile - Halterabschnitt 2b oder Rastklaue 6 - nachgiebig federnd bzw. elastisch verformbar gestaltet ist, so daß beim Verrasten des jeweiligen Seitenteils 3, 4 mit dem Rückwandteil 2 eine gewisse elastische Deformation und Rückstellung des betreffenden Teils ermöglicht wird.

An dem Rückwandteil 2 und den Seitenteilen 3, 4 sind im montierten Zustand unter Spannung befindliche Klemmfedern 7 angeordnet. Sie dienen dazu, die Seitenteile in ihre Sollposition aufzustellen bzw. sie darin zu fixieren. Dabei ist eine solche Klemmfeder 7 an einem Endbereich an einem Seitenteil festgelegt, während der andere Endbereich mit dem Rückwandteil 2 in Eingriff bringbar ist. Hierzu sind seitens des Rückwandteiles 2 Eingriffe und/oder Anschläge vorsehbar. Die Klemmfedern 7 dienen dazu, auf die Seitenteile 3, 4 jeweils ein Moment aufzubringen, das die Seitenteile jeweils um den Bereich der scharnierartig wirkenden Clip-Verbindung 2b, 6 nach außen zu verschwenken versucht. Dabei wird ein Teilbereich 4b des jeweiligen Seitenwandabschnittes 3a, 4a gegen den benachbarten kurzen Schenkel 2a des Rückwandteils 2 gedrückt. Durch eine geeignete Ausgestaltung kann die Klemmfeder 7 eine weitere Funktion ausüben, die darin besteht, die Rastklaue möglichst zuverlässig in ihrer Rastposition zu halten. Dazu ist die Klemmfeder derart geformt, daß sie im montierten Zustand eng an der Rastklaue 6 anliegt, so daß eine nennenswerte Verformung der Rastklaue 6 durch die Klemmfeder 7 blockiert oder wenigstens behindert wird. Dadurch läßt sich zuverlässig sicherstellen, daß die Clip-Verbindung nicht durch irgendeine äußere Belastung des entsprechenden Seitenteils 3, 4 unbeabsichtigt gelöst wird.

## Patentansprüche

1. Modular aufgebauter Elektroinstallationskanal mit einem einseitig offenen, durch einen Deckel verschließbaren Kastenprofil, das einen Rückwand-, zwei Seitenwand- und zwei mit Rinnen zum Einsetzen des Deckels versehene Frontabschnitte aufweist und aus wenigstens drei Profilteilen aufgebaut ist, die schwenk- und einrastbar aneinandergehalten sind,
**dadurch gekennzeichnet, daß**
das Rückwandteil (2) als C-förmige Schiene mit seitlich hochragenden Schenkeln (2a) ausgebildet ist und daß im Bereich der freien Enden der Schenkel (2a) scharnierartige Halteabschnitte (2b) vorgesehen sind, an denen nach innen abschwenkbare Seitenteile (3, 4) rastend und mit einem Teilbereich in Anlage an den Außenflächen der Schenkel (2a) des Rückwandteiles (2) gehalten sind

2. Elektroinstallationskanal nach Anspruch 1, dadurch gekennzeichnet, daß eine Klemmfeder (7) vorgesehen ist, die jeweils an einem Seitenteil (3, 4) und dem Rückwandteil (2) fixiert ist und das jeweilige Seitenteil nach außen gegen die Schenkel des Rückwandteils (2) drückt.

3. Elektroinstallationskanal nach Anspruch 1, dadurch gekennzeichnet, daß die Halteabschnitte als nach innen gerichtete Umkantungen (2b) ausgebildet sind, die von elastisch verformbaren, einstückig mit dem Seitenteil (3, 4) ausgebildeten Rastklauen (6) formschlüssig hintergriffen werden.

4. Elektroinstallationskanal nach einem der Ansprüche 2 oder 3, dadurch gekennzeichnet, daß die Klemmfeder (7) die zugeordnete Rastklaue (6) umgreift und in ihre Rastposition zwingt.

5. Elektroinstallationskanal nach einem der Ansprüche 1 bis 4, dadurch gekennzeichnet, daß das Rückwandteil (2) aus einem festeren Material als die Seitenteile (3, 4), insbesondere aus Stahl, hergestellt ist, und daß die Seitenteile insbesondere aus Aluminium und/oder Kunststoff gefertigt sind.
